(19) **Europäisches Patentamt**
**European Patent Office**
**Office européen des brevets**

(11) **EP 4 317 275 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
**C08J 9/16** $^{(2006.01)}$

(21) Application number: **22779748.7**

(52) Cooperative Patent Classification (CPC):
**C08J 9/16**

(22) Date of filing: **01.03.2022**

(86) International application number:
**PCT/JP2022/008476**

(87) International publication number:
**WO 2022/209523 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021062214**

(71) Applicant: **JSP Corporation**
**Tokyo 100-0005 (JP)**

(72) Inventor: **HAYASHI, Tatsuya**
**Yokkaichi-shi, Mie 510-0881 (JP)**

(74) Representative: **Gille Hrabal**
**Partnerschaftsgesellschaft mbB**
**Patentanwälte**
**Brucknerstraße 20**
**40593 Düsseldorf (DE)**

(54) **METHOD FOR PRODUCING POLYAMIDE RESIN FOAM PARTICLES**

(57) A method for producing a polyamide-based resin expanded bead, the method comprising expanding a polyamide-based resin bead using a physical blowing agent, wherein the polyamide-based resin bead comprises a coloring pigment and a higher fatty acid metal salt having 12 to 24 carbon atoms; a metal in the higher fatty acid metal salt is one or more metals selected from the group consisting of magnesium, aluminum, and zinc; and a content of the higher fatty acid metal salt in the polyamide-based resin bead is 500 to 5000 mass ppm.

**Description**

TECHNICAL FIELD

The present invention relates to a method for producing a polyamide-based resin expanded bead.

BACKGROUND ART

Polyamide-based resins are known as a plastic having high heat resistance, excellent in abrasion resistance and chemical resistance. An expanded molded article made by causing the polyamide-based resin to expand achieves weight saving while maintaining excellent heat resistance, abrasion resistance, chemical resistance, and the like, and as a result further application and development in automobile parts, electrical products, and the like is expected.

Attempts to add pigments and the like are being made to impart designability to polyamide-based resin expanded molded articles and to enhance their appearances.

For example, PTL 1 aims at imparting rigidity, surface smoothness, and metallic luster, and discloses a polyamide resin composition containing a specific polyamide resin, a layered silicate, a platy filler such as talc or mica, and a metallic pigment, and also discloses an expanded molded article obtained therefrom.

PTL 2 aims at obtaining an expanded molded article having a light weight, load bearing properties, and a good appearance, and discloses a polyamide resin composition for an expanded molded article, wherein the polyamide resin composition contains a crystalline polyamide resin, specific carbon black, and an inorganic reinforcing material, and the melting point and the crystallization temperature of the polyamide resin composition have a specific relationship, and also discloses a polyamide resin expanded molded article obtained by using the polyamide resin composition.

CITATION LIST

PATENT LITERATURE

PTL 1: JP 2015-059201 A
PTL 2: WO 2014/185371

SUMMARY OF INVENTION

TECHNICAL PROBLEM

An expanded bead molded article obtained by in-mold molding resin expanded beads containing a coloring pigment may have a surface with color unevenness. General-purpose resins such as conventionally used polyolefin-based resins have excellent expandability and, thus, expanded beads can be readily obtained. Accordingly, the color unevenness of expanded beads of general-purpose resins containing a coloring pigment can be suppressed by regulating expansion conditions, the amount of a foam cell nucleating agent, and the like. However, polyamide-based resin expanded beads have inferior expandability to general-purpose resins. As for the polyamide-based resin expanded beads containing a coloring pigment, it is thus difficult to suppress the color unevenness of the surface of a molded article by regulating expansion conditions and the amount of a foam cell nucleating agent.

Accordingly, a problem to be solved by the present invention is to provide a method for producing a polyamide-based resin expanded bead, the method providing a polyamide-based resin expanded bead, the color unevenness of which is suppressed.

SOLUTION TO PROBLEM

As a result of intensive studies on the problem, the present inventors discovered that the problem can be solved by a method comprising adding a coloring pigment and a specific amount of a higher fatty acid metal salt to a polyamide-based resin bead and expanding the bead using a physical blowing agent.

That is, the present invention provides the following [1] to [8].

[1] A method for producing a polyamide-based resin expanded bead, the method comprising expanding a polyamide-based resin bead using a physical blowing agent, wherein the polyamide-based resin bead comprises a coloring pigment and a higher fatty acid metal salt having 12 to 24 carbon atoms; a metal in the higher fatty acid metal salt is one or more metals selected from the group consisting of magnesium, aluminum, and zinc; and a content of the higher fatty acid metal salt in the polyamide-based resin bead is 500 to 5000 mass ppm.

[2] The method for producing a polyamide-based resin expanded bead according to [1], wherein a content of the coloring pigment in the polyamide-based resin bead is 0.5 to 10% by mass.

[3] The method for producing a polyamide-based resin expanded bead according to [1] or [2], wherein the coloring pigment is carbon black.

[4] The method for producing a polyamide-based resin expanded bead according to [3], wherein a ratio of a content (mass ppm) of the higher fatty acid metal salt to a content (% by mass) of the carbon black [higher fatty acid metal salt/carbon black (mass ppm/% by mass)] is 50 to 3000.

[5] The method for producing a polyamide-based resin expanded bead according to any one of [1] to [4], wherein the polyamide-based resin expanded beads have an apparent density of 10 kg/m$^3$ or more and 300 kg/m$^3$ or less.

[6] The method for producing a polyamide-based resin expanded bead according to any one of [1] to [5], wherein the polyamide-based resin constituting the expanded bead has a melting point of 185°C or higher and 250°C or lower.

[7] The method for producing a polyamide-based resin expanded bead according to any one of [1] to [6], wherein the polyamide-based resin expanded bead has an average cell diameter of 150 $\mu$m or more and 500 $\mu$m or less.

[8] A polyamide-based resin expanded bead comprising a coloring pigment and a higher fatty acid metal salt having 12 to 24 carbon atoms, wherein a metal in the higher fatty acid metal salt is one or more metals selected from the group consisting of magnesium, aluminum, and zinc; and the polyamide-based resin expanded bead has an average cell diameter of 150 to 500 $\mu$m.

ADVANTAGEOUS EFFECTS OF INVENTION

The present invention can provide a method for producing a polyamide-based resin expanded bead, the method providing a polyamide-based resin expanded bead, the color unevenness of which is suppressed.

DESCRIPTION OF EMBODIMENTS

[Method for producing polyamide-based resin expanded bead]

The method for producing a polyamide-based resin expanded bead of the present invention is a method for producing a polyamide-based resin expanded bead, the method comprising expanding a polyamide-based resin bead using a physical blowing agent, wherein the polyamide-based resin bead contains a coloring pigment and a higher fatty acid metal salt having 12 to 24 carbon atoms; a metal in the higher fatty acid metal salt is one or more metals selected from the group consisting of magnesium, aluminum, and zinc; and the content of the higher fatty acid metal salt in the polyamide-based resin bead is 500 to 5000 mass ppm.

<Polyamide-based resin bead>

The polyamide-based resin bead used in the production method of the present invention contains a coloring pigment and a higher fatty acid metal salt having 12 to 24 carbon atoms; a metal in the higher fatty acid metal salt is one or more metals selected from the group consisting of magnesium, aluminum, and zinc; and the content of the higher fatty acid metal salt in the polyamide-based resin bead is 500 to 5000 mass ppm.

As the polyamide-based resin bead, one kind of polyamide-based resin may be used singly or in combinations of two or more thereof.

(Polyamide-based resin)

Examples of the polyamide-based resin constituting the polyamide-based resin bead and constituting the polyamide-based resin expanded bead obtained by the production method of the present invention include a polyamide and a polyamide copolymer, and a polyamide copolymer is preferred.

Examples of the polyamide include a homopolymer such as a poly(6-aminohexanoic acid) that is also known as poly(caprolactam) (polycaproamide, nylon 6), a poly(laurolactam) (nylon 12), a poly(hexamethylene adipamide) (nylon 66), a poly(7-aminoheptanoic acid) (nylon 7), a poly(8-aminooctanoic acid) (nylon 8), a poly(9-aminononanoic acid) (nylon 9), a poly(10-aminodecanoic acid) (nylon 10), a poly(11-aminoundecanoic acid) (nylon 11), a poly(hexamethylene sebacamide) (nylon 610), a poly(decamethylene sebacamide) (nylon 1010), a poly(hexamethylene azelamide) (nylon 69), a poly(tetramethylene adipamide) (nylon 46), a poly(tetramethylene sebacamide) (nylon 410), a poly(pentamethylene adipamide) (nylon 56) and a poly(pentamethylene sebacamide) (nylon 510). The polyamide copolymer refers to a copolymer having two or more repeating units, with at least a part of the repeating units each having an amide bond.

Examples of the polyamide copolymer include a polycaproamide/polyhexamethylene adipamide copolymer (nylon 6/66), a caprolactam/hexamethylene diaminoadipic acid/lauryllactam copolymer (nylon 6/66/12), and a caprolactam/lauryllactam copolymer (nylon 6/12). As the polyamide-based resin, these polyamides and polyamide copolymers may be used singly or in combinations of two or more thereof. Among the polyamide-based resins, a polyamide-based resin made of one or two or more in combination of selected from the group consisting of nylon 6, nylon 66, nylon 6/66 and nylon 6/66/12 is preferred, and nylon 6/66 or nylon 6/66/12 is more preferred.

Although the polyamide copolymer may be a block copolymer including a combination of a sequence of a certain quantity of the same repeating unit of amide and a sequence of a certain quantity of a different amide, or a random copolymer including different amides each randomly repeating, a random copolymer is preferred. If the polyamide copolymer is a random copolymer, in-mold molding of the polyamide-based resin expanded beads is able to be performed under a relatively low forming pressure.

The polyamide-based resin used in the production method of the present invention has a flexural modulus of preferably 1000 MPa or more, more preferably 1100 MPa or more, and still more preferably 1200 MPa or more. Amide-based elastomers generally have a flexural modulus of 600 MPa or less. It is preferable that the polyamide-based resin have a flexural modulus in the above range because the polyamide-based resin hardly contracts even when exposed to normal temperature after expanding due to the high flexural modulus, and so a high-expansion expanded bead can be obtained more easily. Also, another reason is that, due to the high flexural modulus, in-mold formability is excellent. The upper limit of the flexural modulus of the polyamide-based resin is about 3000 MPa.

The flexural modulus of a polyamide-based resin is able to be obtained by measurement in accordance with JIS K7171: 2016 after the test piece is left standing at a temperature of 23°C and a humidity of 50% for 24 hours.

The polyamide-based resin used in the production method of the present invention has a density of preferably 1.05 $g/cm^3$ or more, and preferably 1.1 $g/cm^3$ or more. Amide-based elastomers generally have a density of less than 1.05 $g/cm^3$. The measurement of the density is able to be performed based on the method described in ISO 1183-3.

From the viewpoint of obtaining a polyamide-based resin expanded bead having excellent heat resistance, the polyamide-based resin used in the polyamide-based resin bead and constituting the obtained polyamide-based resin expanded bead has a melting point (TmO) of preferably 185°C or more, more preferably 188°C or more, and still more preferably 190°C or more. On the other hand, from the viewpoint that temperature control during expanding is easy, the polyamide-based resin has a melting point (TmO) of preferably 250°C or less, more preferably 230°C or less, and still more preferably 225°C or less.

When the polyamide-based resin is one polyamide-based resin alone, the melting point of the polyamide-based resin is the melting point of that polyamide-based resin. When the polyamide-based resin is a mixture of two or more polyamide-based resins, or a mixture of a polyamide-based resin and another thermoplastic resin, the melting point of the polyamide-based resin is the melting point of the mixture kneaded with an extruder in advance.

In the present specification, the melting point (TmO) of the resin is a value calculated as the peak top temperature of the melting peak of a DSC curve obtained at a heating rate of 10°C/min by heat-flux differential scanning calorimetry based on JIS K7121-1987 employing "when measuring the fusion temperature after performing a certain heat treatment" as the state adjustment of the test piece (the heating rate and the cooling rate in the state adjustment of the test piece are 10°C/min in each case). When the DSC curve has a plurality of melting peaks, the peak top temperature of the melting peak having the largest area is employed as the fusion temperature. The test piece of the polyamide-based resin to be used is, for example, stored in a desiccator and then vacuum-sucked and stored so as to avoid high temperature and high humidity conditions and not become hydrolyzed.

It is preferable that the polyamide-based resin used in the production method of the present invention be an end-capped polyamide-based resin with a capped functional group at a molecular chain end. Thereby, hydrolysis of the polyamide-based resin expanded bead in a production step is more reliably suppressed, so that a polyamide-based resin expanded bead that can be used for in-mold molding is easily obtained.

Further, the durability of a polyamide-based resin expanded bead molded article obtained by in-mold molding (hereinafter, also referred to simply as "expanded bead molded article" or "molded article") is enhanced.

Examples of an end-capping agent for capping the above molecular chain end include a carbodiimide compound, an oxazoline compound, an isocyanate compound and an epoxy compound.

Among these, a carbodiimide compound is preferred. Specific examples thereof include an aromatic monocarbodiimide such as bis(dipropylphenyl)carbodiimide (e.g., "Stabaxol 1-LF" manufactured by Rhein Chemie Corporation), an aromatic polycarbodiimide (e.g., "Stabaxol P", "Stabaxol P100" and "Stabaxol P400" manufactured by Rhein Chemie Corporation), and an aliphatic polycarbodiimide such as poly(4,4'-dicyclohexylmethane carbodiimide) (e.g., "Carbodilite LA-1" manufactured by Nisshinbo Chemical Inc.). These end-capping agents may be used singly or in combinations of two or more thereof.

The amount of the end-capping agent compounded is preferably 0.1 to 5 parts by mass, and more preferably 0.5 to 3 parts by mass, relative to 100 parts by mass of the polyamide-based resin.

As described above, the polyamide-based resin for use in the present invention is preferably a polyamide-based resin with an end-capped with one or more end-capping agents selected from the group consisting of a carbodiimide compound, an epoxy compound, and an isocyanate compound, more preferably a polyamide-based resin that is end-capped with a carbodiimide compound.

(Coloring pigment)

The polyamide-based resin bead used in the production method of the present invention contains a coloring pigment. The coloring pigment is used to improve the appearance of an expanded bead and an expanded bead molded article and to enhance designability. Examples of the coloring pigment include an inorganic pigment and an organic pigment, and these may be mixed and used. An inorganic pigment is preferred from the viewpoint of heat resistance and weather resistance.

Examples of the inorganic pigment include titanium oxide, carbon black, titanium yellow, iron oxide, ultramarine blue, cobalt blue, a calcination pigment, a metallic pigment, mica, a pearl pigment, zinc white, precipitated silica, and cadmium red, and carbon black is preferred.

Examples of the organic pigment include a monoazo-based pigment, a condensed azo-based pigment, an anthraquinone-based pigment, an isoindolinone-based pigment, a perinone-based pigment, a quinacridone-based pigment, a perylene-based pigment, a thioindigo-based pigment, a dioxazine-based pigment, a phthalocyanine-based pigment, a nitroso-based pigment, and an organic fluorescent pigment.

Among these, the coloring pigment is preferably carbon black.

From the viewpoint of suppressing the color unevenness of the expanded bead and the expanded bead molded article while imparting excellent designability to the expanded bead and the molded article, the content of the coloring pigment in the polyamide-based resin bead is preferably 0.5% by mass or more, more preferably 1% by mass or more, and still more preferably 2% by mass or more. On the other hand, from the viewpoint of attaining excellent expandability when expanding the polyamide-based resin bead and fusion bonding properties between expanded beads when obtaining the expanded bead molded article, the content of the coloring pigment in the polyamide-based resin bead is preferably 10% by mass or less, more preferably 5% by mass or less, and still more preferably 3% by mass or less.

(Higher fatty acid metal salt)

The polyamide-based resin bead used in the production method of the present invention contains a higher fatty acid metal salt having 12 to 24 carbon atoms, the metal in the higher fatty acid metal salt is one or more metals selected from the group consisting of magnesium, aluminum, and zinc, and the content of the higher fatty acid metal salt in the polyamide-based resin bead is 500 to 5000 mass ppm.

While it is not clear as to why the use of the polyamide-based resin bead containing a specific amount of a higher fatty acid metal salt as a raw material for the production method of the present invention can suppress the color unevenness of the obtained polyamide-based resin expanded bead, probably the higher fatty acid metal salt acts as a foam conditioner and thus affects the size, shape, distribution, and the like especially of cells in the surface, so the state of cells becomes homogenous, and also the state of dispersion of the coloring pigment on the surface of the expanded bead becomes homogenous, and accordingly the color unevenness can be reduced.

The higher fatty acid metal salt used in the production method of the present invention is a higher fatty acid metal salt having 12 to 24 carbon atoms, and the metal in the higher fatty acid metal salt is one or more metals selected from the group consisting of magnesium, aluminum, and zinc. The higher fatty acid metal salt is preferably one or more metal salts selected from the group consisting of a higher fatty acid magnesium salt having 12 to 24 carbon atoms, an higher fatty acid aluminum salt having 12 to 24 carbon atoms, and a higher fatty acid zinc salt having 12 to 24 carbon atoms, more preferably one or more metal salts selected from the group consisting of a higher fatty acid magnesium salt having 12 to 24 carbon atoms and a higher fatty acid aluminum salt having 12 to 24 carbon atoms, and more preferably a higher fatty acid magnesium salt having 12 to 24 carbon atoms.

The higher fatty acid constituting the higher fatty acid metal salt is a higher fatty acid having 12 to 24 carbon atoms, preferably a higher fatty acid having 14 to 22 carbon atoms, and more preferably a higher fatty acid having 16 to 18 carbon atoms.

Specific examples include a saturated fatty acid and an unsaturated fatty acid.

The saturated fatty acid is preferably one or more saturated fatty acids selected from the group consisting of lauric acid, palmitic acid, stearic acid, and behenic acid, more preferably one or more saturated fatty acids selected from the group consisting of palmitic acid and stearic acid, and still more preferably stearic acid. The saturated fatty acid may contain a plurality of saturated fatty acids, and even when a plurality of saturated fatty acids are contained, stearic acid is preferably the main component.

The unsaturated fatty acid is preferably one or more unsaturated fatty acids selected from the group consisting of oleic acid, erucic acid, linoleic acid, and linolenic acid.

Specifically the higher fatty acid metal salt is preferably one or more metal salts selected from the group consisting of magnesium laurate, magnesium palmitate, magnesium stearate, magnesium behenate, aluminum laurate, aluminum palmitate, aluminum stearate, aluminum behenate, zinc laurate, zinc palmitate, zinc stearate, and zinc behenate, more preferably one or more metal salts selected from the group consisting of magnesium palmitate, magnesium stearate, aluminum palmitate, aluminum stearate, zinc palmitate, and zinc stearate, still more preferably one or more metal salts selected from the group consisting of magnesium stearate, aluminum stearate, and zinc stearate, and further preferably magnesium stearate. The higher fatty acid metal salt may contain a plurality of higher fatty acid metal salts, and even when a plurality of higher fatty acid metal salts are contained, magnesium stearate is preferably the main component. Stearic acid may contain a small amount of other fatty acids such as palmitic acid and myristic acid, and this is a characteristic of commercial grade stearic acid. Commercial grade magnesium stearate may also contain a small amount of other fatty acid magnesium salts such as magnesium palmitate and magnesium myristate.

The melting point of the higher fatty acid metal salt is preferably 100 to 175°C, more preferably 100 to 160°C, and still more preferably 100 to 150°C. The melting point of the higher fatty acid metal salt can be measured as a melting peak temperature by heat-flux differential scanning calorimetry (DSC) based on JIS K7121-1987. The higher fatty acid metal salt is used as a test piece, the section under "(2) When measuring the fusion temperature after performing a certain heat treatment" is employed as the state adjustment of the test piece, and the heating rate and the cooling rate are both 10°C/min. When the DSC curve has two or more melting peaks, the peak top temperature of the melting peak having the largest area is employed as the melting point.

The content of the higher fatty acid metal salt in the polyamide-based resin bead is 500 to 5000 mass ppm. From the viewpoint of further suppressing the color unevenness of the polyamide-based resin expanded bead, the content of the higher fatty acid metal salt in the polyamide-based resin bead is preferably 600 mass ppm or more, more preferably 700 mass ppm or more, and still more preferably 800 mass ppm or more. On the other hand, from the viewpoint of suppressing an excessively small cell diameter while suppressing the color unevenness of the polyamide-based resin expanded bead, the content of the higher fatty acid metal salt in the polyamide-based resin bead is preferably 4000 mass ppm or less, more preferably 3000 mass ppm or less, and still more preferably 2000 mass ppm or less.

In particular, when magnesium stearate is used as the higher fatty acid metal salt, the content of magnesium stearate in the polyamide-based resin bead is preferably 500 to 5000 mass ppm, more preferably 600 to 4000 mass ppm, still more preferably 700 to 3000 mass ppm, and further preferably 800 to 2000 mass ppm. When the content of the higher fatty acid metal salt is within the above range, the color unevenness of the obtained polyamide-based resin expanded bead and the molded article can be effectively suppressed.

The ratio of the content (mass ppm) of the higher fatty acid metal salt to the content (% by mass) of the carbon black [higher fatty acid metal salt/carbon black (mass ppm/% by mass)] is preferably 50 or more, more preferably 200 or more, and still more preferably 300 or more. The ratio [higher fatty acid metal salt/carbon black (mass ppm/% by mass)] is preferably 3000 or less, more preferably 2000 or less, and still more preferably 1000 or less. When the ratio [higher fatty acid metal salt/carbon black (mass ppm/% by mass)] satisfies the above range, an expanded molded article with more suppressed color unevenness is likely obtained.

(Other resins and additives)

The polyamide-based resin bead may contain another thermoplastic resin as long as the object and effect of the present invention are not impaired. Examples of the another thermoplastic resin include a polyethylene-based resin, a polypropylene-based resin, a polystyrene-based resin, a vinyl acetate resins, a thermoplastic polyester resin, an acrylic acid ester resin, and a methacrylic acid ester resin.

From the viewpoint of obtaining a polyamide-based resin expanded bead having excellent heat resistance, abrasion resistance, and chemical resistance, the content of the polyamide-based resin in the polyamide-based resin bead is preferably 50% by mass or more, more preferably 70% by mass or more, still more preferably 80% by mass or more, further preferably 90% by mass or more, and still further preferably 95% by mass or more.

From the viewpoint of obtaining a polyamide-based resin expanded bead having excellent heat resistance, abrasion resistance, and chemical resistance, the content of the polyamide-based resin (relative to the total of the polyamide-based resin and another thermoplastic resin) in the resin contained in the polyamide-based resin bead is preferably 50% by mass or more, more preferably 70% by mass or more, still more preferably 80% by mass or more, further preferably 90% by mass or more, still further preferably 95% by mass or more, and particularly preferably 100% by mass.

To the polyamide-based resin bead, typically used various additives such as an antistatic agent, a conductivity imparting agent, a lubricant, an antioxidant, a UV absorber, a flame retardant, a metal deactivator, a crystal nucleating agent, an anti-weathering agent, and a filler, may be appropriately added on an as needed basis in addition to the polyamide-based resin. Although the amount of these various additives added is different depending on the purpose and the application, it is preferably 25 parts by mass or less relative to 100 parts by mass of polymer components of the polyamide-based resin bead. The amount is more preferably 15 parts by mass or less, still more preferably 10 parts by mass or less, and further preferably 5 parts by mass or less.

(Mass and production method of polyamide-based resin bead)

The mass of one polyamide-based resin bead is appropriately set depending on the size, the apparent density, etc. of the target polyamide-based resin expanded bead, but is preferably 0.5 to 15.0 mg. With a mass in the above range, the apparent density can be improved. From this viewpoint, the lower limit of the mass of the polyamide-based resin bead is more preferably 1.0 mg, and still more preferably is 1.5 mg. On the other hand, the upper limit is more preferably 10.0 mg, still more preferably 7.0 mg, and furthermore preferably 5.0 mg.

The method for producing the polyamide-based resin bead is not particularly limited, and a known method may be employed. The polyamide-based resin bead is obtained by, for example, a strand cutting method including the steps of feeding a polyamide-based resin, a coloring pigment, a higher fatty acid metal salt, and, on an as needed basis, an additive such as a foam conditioner, an end-capping agent, and an anti-weathering agent, into an extruder to make a molten kneaded product by kneading, extruding the molten kneaded product in a strand form from a small hole of a die attached to the tip of the extruder, and cutting the extruded molten product to have a predetermined mass by a pelletizer, a hot cutting method including the step of extruding the molten kneaded product into a gas phase so as to be then immediately cut, or an underwater cutting method (UWC method) including the step of extruding the molten kneaded product into water so as to be then immediately cut.

When producing the polyamide-based resin bead, preferably a masterbatch is prepared in which a coloring pigment is dispersed in a thermoplastic resin in advance, and then a polyamide-based resin, the masterbatch, a higher fatty acid metal salt, and optionally added additives are supplied to an extruder. Forming a masterbatch of the coloring pigment facilitates uniform dispersion of the coloring pigment in the polyamide-based resin bead.

The concentration of the coloring pigment in the masterbatch is preferably 20 to 70% by mass, more preferably 30 to 65% by mass, and still more preferably 35 to 60% by mass. From the viewpoint of causing the coloring pigment to be more readily dispersed in the polyamide-based resin, the thermoplastic resin in the masterbatch is preferably a polyamide-based resin or a styrene-acrylonitrile copolymer.

<Examples of method for producing polyamide-based resin expanded bead>

The method for producing a polyamide-based resin expanded bead of the present invention has the "impregnating step" of impregnating the polyamide-based resin bead containing a coloring pigment and a higher fatty acid metal salt with a physical blowing agent, and the "expanding step" of expanding the polyamide-based resin bead impregnated with the physical blowing agent by heating, pressure change, volume change, or the like.

(Physical blowing agent)

In the production method of the present invention, a physical blowing agent is used as a blowing agent. Examples of the physical blowing agent include an organic physical blowing agent such as an aliphatic hydrocarbon such as propane, butane, pentane, hexane and heptane, an alicyclic hydrocarbon such as cyclopentane and cyclohexane, a halogenated hydrocarbon such as chlorofluoromethane, trifluoromethane, 1,1-difluoroethane, 1,1,1,2-tetrafluoroethane, methyl chloride, ethyl chloride, methylene chloride, and a dialkyl ether such as dimethyl ether, diethyl ether and methyl ethyl ether. Examples of the inorganic physical blowing agent include carbon dioxide, nitrogen, helium, argon and air.

From the viewpoints of less impact on the environment and excellence in safety due to inflammability, among the physical blowing agents, an inorganic physical blowing agent is preferred. Carbon dioxide or nitrogen is more preferred and carbon dioxide is still more preferred.

(Examples of production method)

While the method for producing a polyamide-based resin expanded bead of the present invention is not limited as long as it has the "impregnating step" and "expanding step" described above, preferable are [1] a method in which a resin bead is impregnated with a blowing agent, then the resin bead impregnated with the blowing agent is taken out without being expanded, and then the resin bead is heated in an expanding apparatus to obtain an expanded bead, and [2] a method in which a resin bead dispersed in a dispersion medium in a closed apparatus is impregnated with a blowing agent, the temperature is raised so as to be around the softening temperature of the resin, and then the resin bead is discharged out of the apparatus together with the dispersion medium under reduced pressure to obtain an expanded bead. The method [2] is more preferred.

The method [2], which is the more preferred production method, will now be described below.

The method for producing a polyamide-based resin expanded bead of the present invention preferably has the following steps:

(1) the dispersing step of obtaining a dispersion by dispersing the polyamide-based resin bead in water in a closed vessel;
(2) the impregnating step of impregnating the polyamide-based resin bead in the dispersion with a physical blowing agent;
(3) the retaining step of retaining the dispersion at a temperature equal to or higher than 90°C lower (Tm - 90°C) and less than 50°C lower (Tm - 50°C) than the melting point (Tm) of the polyamide-based resin bead for a retention time of 1 minute or more and 60 minutes or less; and
(4) the expanding step of controlling a temperature (Te) of the dispersion immediately before expanding to a temperature equal to or higher than 90°C lower (Tm - 90°C) and less than 50°C lower (Tm - 50°C) than the melting point (Tm) of the polyamide-based resin bead and then discharging the polyamide-based resin bead including the blowing agent together with water from inside of the closed vessel under a pressure lower than a pressure in the closed vessel to cause expanding.

The method for producing a polyamide-based resin expanded bead (hereinafter, also simply referred to as an "expanded bead") of the present invention may have a step other than the steps described above, and may include other components in the steps described above. The impregnating step and the retaining step may be performed simultaneously, or the retaining step may be performed before the impregnating step.

[Dispersing step]

The dispersing step is a step of obtaining a dispersion by dispersing a polyamide-based resin bead in water in a closed vessel.
The method for dispersing the polyamide-based resin bead in water is not particularly limited and a known method may be used. For example, while stirring water with a stirrer, polyamide-based resin beads are added, and a dispersion is able to be obtained by further stirring.
On an as needed basis, it is preferable that a dispersant such as inorganic material such as aluminum oxide, tricalcium phosphate, magnesium pyrophosphate, zinc oxide, kaolin, mica, talc and smectite, and a dispersion aid such as anionic surfactant such as sodium dodecylbenzene sulfonate and sodium alkane sulfonate be added to the dispersion. The mass ratio between the polyamide-based resin beads and the dispersant (resin bead/dispersant) is preferably 20 to 2000, and more preferably 30 to 1000. The mass ratio between the dispersant and the dispersion aid (dispersant/dispersion aid) is preferably 1 to 500, and more preferably 1 to 100.

[Impregnating step]

The impregnating step is a step of impregnating the polyamide-based resin bead in the dispersion with a physical blowing agent. At the same time, the polyamide-based resin bead may be caused to absorb water. Although the method for impregnating the polyamide-based resin beads with a blowing agent is not particularly limited, it is preferable that the polyamide-based resin beads be dispersed in water in a pressurizable closed vessel such as autoclave so as to be impregnated with the blowing agent. From the viewpoint of sufficiently impregnating the polyamide-based resin bead with the blowing agent in a short time, it is preferable that the impregnation of the polyamide-based resin beads with the blowing agent be performed by heating in addition to pressurization.
The impregnating step includes, in the case of pressurizing, a step of the pressure in the closed vessel reaching the pressure at the time of impregnation (hereinafter, also referred to as impregnation pressure) from atmospheric pressure.
Further, the step of impregnating with a blowing agent includes a step of heating the dispersion in which the polyamide-based resin beads are dispersed in water from ordinary temperature to the temperature at the time of impregnation (hereinafter, also referred to as impregnation temperature).
From the viewpoint of sufficiently impregnating the polyamide-based resin beads with the blowing agent in a short time, the temperature during impregnation by heating is preferably 50°C or more, more preferably 80°C or more, and preferably the melting point (Tm (°C)) of the polyamide-based resin bead or less, more preferably (Tm - 20 (°C)) or less.
From the viewpoint of sufficiently impregnating the polyamide-based resin beads with the blowing agent in a short time, it is preferable that the pressure during impregnation under pressurized conditions (hereinafter also referred to as impregnation pressure) be controlled such that the pressure in the closed vessel after addition of blowing agent to the vessel containing the dispersion is preferably 1.5 MPa (G) or more, more preferably 2.5 MPa (G) or more, and preferably 7.0 MPa (G) or less, more preferably 5.0 MPa (G) or less.

"1.5 MPa (G)" means that the gauge pressure is 1.5 MPa.

The dispersing step and the impregnating step also have the role of causing the polyamide-based resin bead to absorb water. From the viewpoint of plasticizing the polyamide-based resin bead by allowing it to sufficiently absorb water, a total time of the step of obtaining the dispersion and the step of impregnating with a blowing agent is preferably 20 minutes or more, and more preferably 30 minutes or more. On the other hand, from the viewpoint of the productivity of the polyamide-based resin expanded beads, the total time is preferably 60 minutes or less.

Further, from the viewpoint of plasticizing the polyamide-based resin bead by being caused to sufficiently absorb water, the temperature rising rate in the impregnating step is preferably 10°C/min or less, and more preferably 7°C/min or less. On the other hand, from the viewpoint of the productivity of the polyamide-based resin expanded beads, the temperature rising rate is preferably 1 °C/min or more, and more preferably 2 °C/min or more.

[Retaining step]

The retaining step is a step of retaining the dispersion at a temperature equal to or higher than 90°C lower (Tm - 90°C) and less than 50°C lower (Tm - 50°C) than the melting point (Tm) of the polyamide-based resin bead for a retention time of 1 minute or more and 60 minutes or less.

From the viewpoint of plasticizing the polyamide-based resin by allowing it to sufficiently absorb water, and from the viewpoint of allowing the polyamide-based resin to be uniformly impregnated with the blowing agent, the retention temperature of the dispersion in the retaining step is equal to or higher than a temperature 90°C lower than the melting point (Tm) of the polyamide-based resin bead (Tm - 90°C), preferably equal to or higher than a temperature 80°C lower than the melting point (Tm - 80°C), more preferably equal to or higher than a temperature 70°C lower than the melting point (Tm - 70°C), still preferably equal to or higher than a temperature 65°C lower than the melting point (Tm - 65°C), and is lower than a temperature 50°C lower than the melting point (Tm) of the polyamide-based resin bead (Tm - 50°C), preferably equal to or lower than a temperature 55°C lower than the melting point (Tm) (Tm - 55°C), more preferably equal to or lower than a temperature 57°C lower than the melting point (Tm) (Tm - 57°C), and still preferably equal to or lower than a temperature 59°C lower than the melting point (Tm) (Tm - 59°C).

Normally, when producing an expanded bead using a general-purpose resin such as a polypropylene resin as a base resin, the raw material resin is retained near its melting point. However, in the method for producing the polyamide-based resin expanded bead of the present invention, the polyamide-based resin expanded bead is produced by retaining at a temperature equal to or higher than 90°C lower (Tm - 90°C) and less than 50°C lower (Tm - 50°C) than the melting point (Tm) of the polyamide-based resin bead. This is performed because the polyamide-based resin has water absorption, so the polyamide-based resin bead is plasticized by the water used as the dispersion, which is considered to significantly lower its melting point, thereby enabling an expanded bead having a desired apparent density and closed cell ratio to be produced at a significantly lower melting point than that of the polyamide-based resin bead.

From the viewpoint of allowing the polyamide-based resin to be uniformly impregnated with the blowing agent, to obtain a polyamide-based resin expanded bead having a high closed cell ratio, the retention time in the retaining step is 1 minute or more, preferably 5 minutes or more, more preferably 10 minutes or more, and still more preferably 13 minutes or more. Further, from the viewpoint of the productivity of the polyamide-based resin expanded beads, and the viewpoint of preventing hydrolysis of the polyamide-base resin, the retention time in the retaining step is 60 minutes or less, preferably 40 minutes or less, more preferably 30 minutes or less, still preferably 20 minutes or less, and still more preferably 18 minutes or less. When the retention time is as described above, a polyamide-based resin expanded bead having a low apparent density and a high closed cell ratio can be obtained. The retaining step may be performed by setting multiple steps in the above-described temperature range, or the temperature may be slowly increased over a sufficient time in the above-described temperature range. From the viewpoint of easier production, it is preferable to set a one-step process in the above-described temperature range (constant retention temperature) and retain for the time described above.

From the viewpoint of allowing the polyamide-based resin to be uniformly impregnated with the blowing agent, it is preferable that the retaining step be performed under pressurized conditions, and a same pressure as the impregnation pressure be retained. The pressure in the vessel containing the dispersion is controlled to preferably 1.5 MPa (G) or more, more preferably 2.5 MPa (G) or more. Also, the pressure in the vessel containing the dispersion is controlled to 7.0 MPa (G) or less, more preferably 5.0 MPa (G) or less.

[Expanding step]

An expanding step is a step of causing expanding of the polyamide-based resin beads impregnated with a blowing agent.

Although the expanding method of the polyamide-based resin beads is not particularly limited, a expanding method including, following the retaining step, a method is preferred in which the polyamide-based resin beads impregnated with the blowing agent are discharged together with water to an atmosphere (usually atmospheric pressure) at a pressure lower than the pressure in the retaining step to cause expanding.

From the viewpoint of obtaining a polyamide-based resin expanded bead having a low apparent density and a high closed cell ratio, the temperature Te of the dispersion immediately before expanding (hereinafter also referred to as expanding temperature) is equal to or higher than a temperature 90°C lower than the melting point (Tm) of the polyamide-based resin bead (Tm - 90°C), preferably equal to or higher than a temperature 80°C lower than the melting point (Tm) (Tm - 80°C), more preferably equal to or higher than a temperature 70°C lower than the melting point (Tm) (Tm - 70°C), and still more preferably equal to or higher than a temperature 65°C lower than the melting point (Tm) (Tm - 65°C). Also, the expanding temperature is lower than a temperature 50°C lower than the melting point (Tm) of the polyamide-based resin bead (Tm - 50°C), preferably equal to or lower than a temperature 55°C lower than the melting point (Tm) (Tm - 55°C), more preferably equal to or lower than a temperature 57°C lower than the melting point (Tm) (Tm - 57°C), and still more preferably equal to or lower than a temperature 59°C lower than the melting point (Tm) (Tm - 59°C).

In the expanding step, the pressure immediately before discharging (expanding pressure) is preferably 0.5 MPa (G) or more, more preferably 1.5 MPa (G) or more, still more preferably 2.5 MPa (G) or more. Also, the expanding pressure is preferably 10.0 MPa (G) or less, more preferably 7.0 MPa (G) or less, still more preferably 5 MPa or less.

[Polyamide-based resin expanded bead]

The polyamide-based resin expanded bead of the present invention contains a coloring pigment and a higher fatty acid metal salt having 12 to 24 carbon atoms, the metal in the higher fatty acid metal salt is one or more metal salts selected from the group consisting of magnesium, aluminum, and zinc, and the average cell diameter is 150 to 500 $\mu$m.

The polyamide-based resin constituting the polyamide-based resin expanded bead of the present invention is preferably the polyamide-based resin constituting the polyamide-based resin bead described above. That is, the polyamide-based resin is preferably the polyamide-based resin described in the section (Polyamide-based resin) constituting the <Polyamide-based resin bead> described above. The polyamide-based resin expanded bead of the present invention may contain another resin and additive as long as the object and effect of the present invention are not impaired, and such another resin and additive are also preferably another resin and additive described in the section (Other resins and additives) constituting the <Polyamide-based resin bead> described above.

The polyamide-based resin expanded bead of the present invention is preferably a polyamide-based resin expanded bead obtained by the production method described above.

That is, the polyamide-based resin expanded bead of the present invention is preferably a polyamide-based resin expanded bead obtained by the method for producing a polyamide-based resin expanded bead, the method including expanding a polyamide-based resin bead using a physical blowing agent, wherein the polyamide-based resin bead contains a coloring pigment and a higher fatty acid metal salt having 12 to 24 carbon atoms, the metal in the higher fatty acid metal salt is one or more metal salts selected from the group consisting of magnesium, aluminum, and zinc, and the content of the higher fatty acid metal salt in the polyamide-based resin bead is 500 to 5000 mass ppm.

By being produced by the production method described above, the obtained polyamide-based resin expanded bead has suppressed color unevenness and an excellent appearance.

The polyamide-based resin expanded beads of the present invention have an apparent density of preferably 10 kg/m$^3$ or more, more preferably 30 kg/m$^3$ or more, and still more preferably 50 kg/m$^3$ or more. The polyamide-based resin expanded beads of the present invention have an apparent density of preferably 300 kg/m$^3$ or less, more preferably 250 kg/m$^3$ or less, and still more preferably 150 kg/m$^3$ or less.

The polyamide-based resin expanded beads obtained by the method for producing a polyamide-based resin expanded bead of the present invention described above have an apparent density of preferably 10 kg/m$^3$ or more, more preferably 30 kg/m$^3$ or more, and still more preferably 50 kg/m$^3$ or more. The polyamide-based resin expanded beads obtained by the method for producing a polyamide-based resin expanded bead of the present invention described above have an apparent density of preferably 300 kg/m$^3$ or less, more preferably 250 kg/m$^3$ or less, and still more preferably 150 kg/m$^3$ or less.

With the apparent density being within the above range, the expanded beads have excellent light-weight characteristics. In the present invention, the polyamide-based resin expanded bead contains a coloring pigment and a specific amount of a higher fatty acid metal salt, and thus a polyamide-based resin expanded bead that has suppressed color unevenness despite a low apparent density can be obtained. The apparent density of the polyamide-based resin expanded beads is measured by the following method.

A measuring cylinder containing water at 23°C is prepared. The mass W1 of about 500 cm$^3$ of expanded beads that are left to stand for 2 days at a relative humidity of 50%, 23°C, and 1 atm is measured, and the expanded beads are sunk into the water using a wire mesh in the measuring cylinder. Considering the volume of the wire mesh, the volume V1 [cm$^3$] of the expanded beads is measured based on the water level rising. The apparent density of the expanded bead is obtained by dividing the mass W1 [g] of the expanded beads by the volume V1 (W1/V1) and converting the unit into [kg/m$^3$].

The polyamide-based resin expanded bead of the present invention has an average cell diameter of 150 μm or more, and the polyamide-based resin expanded bead of the present invention has an average cell diameter of 500 μm or less, preferably 300 μm or less, and more preferably 250 μm or less.

The polyamide-based resin expanded bead obtained by the method for producing a polyamide-based resin expanded bead of the present invention described above has an average cell diameter of preferably 50 μm or more, more preferably 100 μm or more, and still more preferably 150 μm or more. The polyamide-based resin expanded bead obtained by the method for producing a polyamide-based resin expanded bead of the present invention described above has an average cell diameter of preferably 500 μm or less, more preferably 300 μm or less, and still more preferably 250 μm or less. The average cell diameter of the polyamide-based resin expanded bead is measured by the following method.

First, an expanded bead is split into about two through the center of the expanded bead, and a cross section thereof is photographed with a scanning electron microscope. Next, on the cross-sectional photograph, straight lines are drawn in 8 directions at equal intervals from near the center of the cross-section of the expanded bead, and the number of all the foam cells intersecting with the lines in total is counted. The value obtained by dividing the total length of the lines by the number of foam cells counted is defined as the cell diameter of the expanded bead. The procedure is performed in the same manner for 10 or more expanded beads, and the arithmetic mean of the cell diameters of the respective expanded beads is defined as the average cell diameter of the expanded beads.

The polyamide-based resin expanded bead according to the present invention has a closed cell ratio of preferably 85% or more, more preferably 88% or more, and still more preferably 90% or more.

The polyamide-based resin expanded bead obtained by the method for producing a polyamide-based resin expanded bead of the present invention described above has a closed cell ratio of preferably 85% or more, more preferably 88% or more, and still more preferably 90% or more.

When the polyamide-based resin expanded bead has a closed cell ratio satisfying the above range, an expanded bead having a low apparent density is easily obtained. Further, the expanded bead has excellent formability. The closed cell ratio is a ratio of the volume of closed cells to the volume of the whole cells in an expanded bead, which may be determined using an air pycnometer based on ASTM-D2856-70.

The coloring pigment contained in the polyamide-based resin expanded bead of the present invention is the same as the coloring pigment contained in the polyamide-based resin bead, and a preferred coloring pigment is also the same. That is, the coloring pigment is the same as the coloring pigment described in the section (Coloring pigment) above, and a preferred coloring pigment is also the same. Specifically, carbon black is preferred.

The higher fatty acid metal salt contained in the polyamide-based resin expanded bead of the present invention is the same as the higher fatty acid metal salt contained in the polyamide-based resin bead, and a preferred higher fatty acid metal salt is also the same. That is, the higher fatty acid metal salt is the same as the higher fatty acid metal salt described in the section (Higher fatty acid metal salt) above, and a preferred higher fatty acid metal salt is also the same. Specifically the higher fatty acid metal salt is preferably one or more metal salts selected from the group consisting of magnesium laurate, magnesium palmitate, magnesium stearate, magnesium behenate, aluminum laurate, aluminum palmitate, aluminum stearate, aluminum behenate, zinc laurate, zinc palmitate, zinc stearate, and zinc behenate, more preferably one or more metal salts selected from the group consisting of magnesium palmitate, magnesium stearate, aluminum palmitate, aluminum stearate, zinc palmitate, and zinc stearate, still more preferably one or more metal salts selected from the group consisting of magnesium stearate, aluminum stearate, and zinc stearate, and further preferably magnesium stearate.

The content of the higher fatty acid metal salt in the polyamide-based resin expanded bead is 500 to 5000 mass ppm. From the viewpoint of further suppressing the color unevenness of the polyamide-based resin expanded bead, the content of the higher fatty acid metal salt in the polyamide-based resin bead is more preferably 600 mass ppm or more, and still more preferably 800 mass ppm or more. On the other hand, from the viewpoint of suppressing an excessively small cell diameter while suppressing the color unevenness of the polyamide-based resin expanded bead, the content of the higher fatty acid metal salt in the polyamide-based resin bead is more preferably 4000 mass ppm or less, and still more preferably 3000 mass ppm or less. The coloring pigment and the higher fatty acid metal salt can be caused to be contained in the polyamide-based resin expanded bead by the method described in connection with the method for producing a polyamide resin bead of the present invention described above.

<Polyamide-based resin expanded bead molded article>

An expanded molded article can be obtained by in-mold molding of the polyamide-based resin expanded bead obtained by the present invention. A conventional method may be used for the in-mold molding, and use of heating by steam is preferred. Steam allows the polyamide-based resin in the polyamide-based resin expanded bead to absorb water and become plasticized, so that the forming pressure can be reduced. When the resulting molded article is dried to remove moisture, the original properties of the polyamide-based resin are restored, so that a molded article having a high heat resistance can be obtained.

The polyamide-based resin expanded bead according to the present invention can be used to form an expanded bead molded article having excellent in-mold moldability. Specifically, secondary expandability during in-mold molding in order to obtain a molded article is excellent. In addition, this polyamide-based resin expanded bead is preferable because water cooling time can be shortened, and as a result, the overall forming time can be shortened.

The water cooling time of the expanded bead molded article is determined as follows. First, a mold (e.g., length of 200 mm, width of 250 mm, and thickness of 50 mm) is filled with the obtained polyamide-based resin expanded beads, and in-mold molding is performed by steam heating to obtain an expanded bead molded article in a plate form. The heating method is carried out by supplying steam for 5 seconds with the drain valves on both sides of the mold opened for preheating (exhaustion step), then supplying steam from the mold on the moving side, followed by supplying steam from the mold on the stationary side, and then heating to the molding and heating steam pressure (molding pressure = molding vapor pressure). After the heating ends, the pressure is released, and the molded article is cooled with water until the surface pressure due to the foaming force of the molded article decreased to 0.02 MPa (gauge pressure). The mold is then opened and the molded article is removed from the mold. The water cooling time of the expanded bead molded article is taken as the water cooling time (seconds) taken from the start of water cooling until the surface pressure reached 0.02 MPa (gauge pressure).

EXAMPLES

The present invention is described in detail with reference to the following examples, though the present invention is not limited thereto.

Each of the physical properties of the polyamide-based resin, the polyamide-based resin bead, and the polyamide-based resin expanded bead in each example was measured by the following method.

[Measurement methods]

[Melting point]

The melting points of the polyamide-based resin, the polyamide-based resin bead, and the higher fatty acid metal salt were each measured by heat-flux differential scanning calorimetry based on JIS K7121-1987. Heating and melting (first temperature rising) was performed from 30°C to a temperature 30°C higher than the temperature at the end of a melting peak at a heating rate of 10°C/min under a nitrogen inflow of 30 mL/min. The temperature was maintained for 10 minutes, then cooling was performed to 30°C at a cooling rate of 10°C/min, heating and melting were performed again to a temperature 30°C higher than the temperature at the end of a melting peak at a heating rate of 10°C/min, and the peak top temperature of a melting peak in the resulting DSC curve was calculated. A high-sensitivity differential scanning calorimeter "EXSTAR DSC7020" (manufactured by SII Nano Technology Inc.) was used as the measurement apparatus. Further, the polyamide-based resin and the polyamide-based resin beads that were used to measure the melting point were placed in a desiccator so as not to be hydrolyzed under high temperature and high humidity conditions, and then vacuum sucked to reduce the moisture content to 1000 mass ppm or less and stored for 24 hours.

[Flexural modulus]

The flexural modulus of a polyamide-based resin was determined by the measurement in accordance with JIS K7171: 2016. The flexural modulus was measured by preparing a resin test piece having a thickness of 4 mm, a width of 10 mm, and a length of 80 mm and leaving the test piece to stand at a room temperature of 23°C and a humidity of 50% for 72 hours. The measurement was then performed under conditions of a distance between fulcrums of 64 mm, a radius R of the indenter of 15.0 mm, a radius R of the support of 25.0 mm, a test rate of 2 mm/min, a room temperature of 23°C, and a humidity of 50%, using a testing machine Autograph AGS-10 kNG (manufactured by Shimadzu Corporation). The average of calculated values (at 5 points) was used as the flexural modulus.

The flexural modulus of an amide-based elastomer (manufactured by Arkema S.A., product name "PEBAX 5533", melting point: 159°C, density: 1.01 g/cm$^3$) was measured to be 150 MPa by the method described above.

[Evaluations]

(Apparent density of expanded beads)

A measuring cylinder containing water at 23°C was prepared. The mass W1 of about 500 cm$^3$ of expanded beads that were left to stand for 2 days at a relative humidity of 50%, 23°C, and 1 atm was measured, and the expanded beads were sunk into the water using a wire mesh in the measuring cylinder. Considering the volume of the wire mesh, the volume V1 [cm$^3$] of the expanded beads was measured based on the water level rising. The apparent density of the expanded beads was obtained by dividing the mass W1 [g] of the expanded beads by the volume V1, i.e., (W1/V1), and converting the unit into [kg/m$^3$].

[Average cell diameter]

First, an expanded bead was split into about two through the center of the expanded bead, and a cross section thereof was photographed with a scanning electron microscope. Next, on the cross-sectional photograph, straight lines were drawn in 8 directions at equal intervals from near the center of the cross-section of the expanded bead, and the number of all the cells intersecting with the lines in total was counted. The value obtained by dividing the total length of the lines by the number of cells counted was defined as the cell diameter of the expanded bead. The procedure was performed in the same manner for randomly selected 50 expanded beads, and the arithmetic mean of the cell diameters of the respective expanded beads was defined as the average cell diameter of the expanded beads.

[Closed cell ratio]

In accordance with a procedure C described in ASTM-D2856-70, the value of true volume Vx of an expanded bead (sum of the volume of resin constituting the expanded bead and the total volume of cells in a portion of closed cells in an expanded bead) was measured. In the measurement of the true volume Vx, an air pycnometer "930" manufactured by Beckman-Toshiba Ltd., was used. Subsequently, the closed cell ratio was calculated by the following formula (1), and the arithmetic average of the 5 times measurement results was determined.

$$\text{Closed cell ratio (\%)} = (Vx - W / \rho) \times 100 / (Va - W / \rho) \qquad (1)$$

Vx: True volume of expanded bead measured by the above method (cm$^3$)
Va: Apparent volume of expanded bead (cm$^3$)
W: Mass of sample for use in measurement of expanded bead (g)
$\rho$: Density of resin constituting expanded bead (g/cm$^3$)

[Color unevenness of expanded beads]

The color unevenness of the surface of the expanded beads was visually evaluated according to the following criteria. The smaller the proportion of expanded beads having white streaks, the less the color unevenness and the better the appearance of the expanded beads.

(Evaluation criteria)

A: Less than 5% of all expanded beads had white streaks
B: 5% or more and less than 20% of all expanded beads had white streaks
C: 20% or more and less than 50% of all expanded beads had white streaks
D: 50% or more of all expanded beads had white streaks

[Color unevenness of molded article]

The color unevenness of the surface of the molded articles was visually evaluated according to the following criteria. The smaller the proportion of the areas of white streaks, the less the color unevenness and the better the appearance of the molded articles.

(Evaluation criteria)

A: No white streaks on molded article surface
B: Area of white streaks being less than 2% of molded article surface
C: Area of white streaks being 2% or more and less than 5% of molded article surface
D: Area of white streaks being 5% or more of molded article surface

[Higher fatty acid metal salts or other foam cell nucleating agents]

Table 1 shows higher fatty acid metal salts and other foam cell nucleating agents used in Examples and Comparative Examples. Names appearing in "Name" in Table 1 are used in the "higher fatty acid metal salts" column in Table 2 and the "higher fatty acid metal salts or other foam cell nucleating agents" column in Table 3.

Table 1

| Name | Manufacturer | Product Number | Melting point (°C) |
|---|---|---|---|
| Magnesium stearate | Kanto Chemical Co., Inc. | Magnesium stearate 25031-01 | 124 |
| Aluminum stearate | Kanto Chemical Co., Inc. | Aluminum stearate 01185-01 | 104 |
| Zinc stearate | Kanto Chemical Co., Inc. | Zinc stearate 48055-01 | 123 |
| Calcium stearate | Kanto Chemical Co., Inc. | Calcium stearate 07105-01 | 122 |
| Talc | Hayashi Kasei Co., Ltd. | Talcum Powder PK-S | - |
| Zinc borate | Tomita Pharmaceutical Co., Ltd. | Zinc borate 2335 | - |
| PTFE | Seishin Enterprise Co., Ltd. | TFW-1000 | 327 |

Examples 1 to 6

[Production of polyamide-based resin beads]

Polyamide resin "5033B" (manufactured by Ube Industries, Ltd.) was supplied to an extruder, a coloring pigment (carbon black) shown in Table 2 and a higher fatty acid metal salt shown in Table 2 were supplied in amounts shown in Table 2, "Stabaxol P" (manufactured by Rhein Chemie Corporation) as an end-capping agent was supplied so as to be 1 part by mass relative to 100 parts by mass of the polyamide resin, and the mixture was melted and kneaded. The molten kneaded product was extruded from a small nozzle attached to the tip of the extruder as a single layer strand having a circular cross section. The extruded strand was cooled with water, then cut into pieces having a mass of about 2.0 mg each with a pelletizer and dried to obtain polyamide-based resin beads. The color pigment used was a masterbatch having a carbon black concentration of 45% by mass and containing a styrene-acrylonitrile copolymer as a base resin. Meanwhile, polyamide resin "5033B" is polyamide 6/66 copolymer (nylon 6/66) having polyamide 6/polyamide 66 = 85/15, melting point (Tm0): 197°C, density 1.14 g/cm$^3$, flexural modulus: 1300 MPa, and product name: UBE Nylon 5033B. The polyamide-based resin beads had a melting point of 197°C.

[Production of polyamide-based resin expanded bead]

A 400-L autoclave having a stirrer was charged with 10 kg of the obtained polyamide-based resin beads and 310-L of water as dispersion. Further, relative to 100 parts by mass of the polyamide-based resin beads, 3.0 parts by mass of kaolin as dispersant and 0.08 parts by mass of sodium alkylbenzene sulfonate as surfactant were added to the dispersion. While stirring the contents of an autoclave, the temperature was increased from room temperature (23°C), and after the impregnation temperature (136.0°C) was reached, carbon dioxide as a blowing agent was injected into the autoclave until the pressure in the autoclave reached the impregnation pressure (4.0 MPa). At this time, the heating-up period from room temperature (23°C) to the impregnation temperature (136.0°C) was 30 minutes. Next, the contents of the autoclave were retained at 136.0°C under 4.0 MPa for 15 minutes.

The polyamide-based resin beads impregnated with the blowing agent were then discharged together with the dispersion under atmospheric pressure (0.1 MPa). The resulting polyamide-based resin expanded beads were cured in an oven at 60°C for 24 hours and then gradually cooled to obtain polyamide-based resin expanded beads.

The above evaluation was performed on the obtained polyamide-based resin expanded beads. The results are shown in Table 2.

[Production of polyamide-based resin expanded bead molded article]

Next, the polyamide-based resin expanded beads were used to prepare expanded bead molded articles. First, a plate-forming mold having a length of 200 mm, a width of 250 mm and a thickness of 50 mm was filled with the obtained polyamide-based resin expanded beads, and in-mold molding was performed by steam heating to obtain an expanded bead molded article in a plate form. The heating method was carried out by supplying steam for 5 seconds with the drain valves on both sides of the mold opened for preheating (exhaustion step), then supplying steam from the mold on the moving side with the drain valve on the fixed side opened, followed by supplying steam from the mold on the stationary side with the drain valve on the mobile side opened, closing the discharge valve, and then heating to the molding and heating steam pressure (molding pressure = molding vapor pressure). After the heating ended, the pressure was released, and the molded article was cooled with water until the surface pressure due to the expanding force of the molded article decreased to 0.02 MPa (gauge pressure). The mold was then opened and the molded article was removed from the mold. The obtained molded article was cured in an oven at 80°C for 12 hours and then gradually cooled to room temperature, to thereby obtain a polyamide-based resin expanded bead molded article. The above evaluation was performed on the obtained polyamide-based resin expanded bead molded article. The results are shown in Table 2.

Table 2

| | | Example 1 | Example 2 | Example 3 | Example 4 | Example 5 | Example 6 |
|---|---|---|---|---|---|---|---|
| Resin bead | Polyamide resin | 5033B | 5033B | 5033B | 5033B | 5033B | 5033B |
| | Coloring pigment | Carbon black | Carbon black | Carbon black | Carbon black | Carbon black | Carbon black |
| | Amount of coloring pigment*) (% by mass) | 2.5 | 2.5 | 2.5 | 5 | 2.5 | 1.0 |
| | Higher fatty acid metal salt | Magnesium stearate | Aluminum stearate | Zinc stearate | Magnesium stearate | Magnesium stearate | Magnesium stearate |
| | Amount of higher fatty acid metal salt*) (mass ppm) | 1000 | 1000 | 1000 | 1000 | 4000 | 1000 |
| Expanded bead | Apparent density (kg/m$^3$) | 180 | 200 | 150 | 170 | 121 | 234 |
| | Average cell diameter ($\mu$m) | 228 | 221 | 154 | 156 | 150 | 195 |
| | Color unevenness | A | B | B | B | A | B |
| | Closed cell ratio (%) | 94 | 93 | 94 | 92 | 92 | 92 |
| Molded article | Color unevenness | A | B | B | B | A | B |
| *) Amount of coloring pigment and amount of higher fatty acid metal salt are amounts in polyamide-based resin bead (% by mass or mass ppm) | | | | | | | |

Comparative Examples 1 to 5

Polyamide-based resin expanded beads and molded articles were produced in the same manner as in the Examples except that the amount of the coloring pigment and the type and amount of the higher fatty acid metal salt or foam cell nucleating agent used in the Examples were changed as shown in Table 3. Specifically, the expanded beads and molded articles were produced as follows.

[Production of polyamide-based resin beads]

Polyamide resin "5033B" (manufactured by Ube Industries, Ltd.) was supplied to an extruder, a coloring pigment (carbon black) shown in Table 3 and a higher fatty acid metal salt shown in Table 3 or a foam cell nucleating agent shown in Table 3 were supplied in amounts shown in Table 3, "Stabaxol P" (manufactured by Rhein Chemie Corporation) as an end-capping agent was supplied so as to be 1 part by mass relative to 100 parts by mass of the polyamide resin, and the mixture was melted and kneaded. The molten kneaded product was extruded from a small nozzle attached to the tip of the extruder as a single layer strand having a circular cross section. The extruded strand was cooled with water, then cut into pieces having a mass of about 2.0 mg each with a pelletizer and dried to obtain polyamide-based resin beads. The color pigment used was a masterbatch having a carbon black concentration of 45% by mass and containing a styrene-acrylonitrile copolymer as a base resin. Meanwhile, polyamide resin "5033B" is polyamide 6/66 copolymer (nylon 6/66) having polyamide 6/polyamide 66 = 85/15, melting point (Tm0): 197°C, density 1.14 g/cm$^3$, flexural modulus: 1300 MPa, and product name: UBE Nylon 5033B. The polyamide-based resin beads had a melting point of 197°C.

[Production of polyamide-based resin expanded bead]

A 400-L autoclave having a stirrer was charged with 10 kg of the obtained polyamide-based resin beads and 310-L of water as dispersion. Further, relative to 100 parts by mass of the polyamide-based resin beads, 3.0 parts by mass of kaolin as dispersant and 0.08 parts by mass of sodium alkylbenzene sulfonate as surfactant were added to the dispersion. While stirring the contents in an autoclave, the temperature was increased from room temperature (23°C), and after the impregnation temperature (136.0°C) was reached, carbon dioxide as blowing agent was injected into the autoclave until the pressure in the autoclave reached the impregnation pressure (4.0 MPa). At this time, the heating-up period from room temperature (23°C) to the impregnation temperature (136.0°C) was 30 minutes. Next, the contents of the autoclave were retained at 136.0°C under 4.0 MPa for 15 minutes.
The polyamide-based resin beads impregnated with the blowing agent were then discharged together with the dispersion under atmospheric pressure (0.1 MPa). The resulting polyamide-based resin expanded beads were cured in an oven at 60°C for 24 hours and then gradually cooled to obtain polyamide-based resin expanded beads.
The above evaluation was performed on the obtained polyamide-based resin expanded beads. The results are shown in Table 3.

[Production of polyamide-based resin expanded bead molded article]

Next, an expanded bead molded article was produced using the polyamide-based resin expanded beads. First, a plate-forming mold having a length of 200 mm, a width of 250 mm and a thickness of 50 mm was filled with the obtained polyamide-based resin expanded beads, and in-mold molding was performed by steam heating to obtain an expanded bead molded article in a plate form. The heating method was carried out by supplying steam for 5 seconds with the drain valves on both sides of the mold opened for preheating (exhaustion step), then supplying steam from the mold on the moving side with the drain valve on the fixed side opened, followed by supplying steam from the mold on the stationary side with the drain valve on the mobile side opened, closing the discharge valve, and then heating to the molding and heating steam pressure (molding pressure = molding vapor pressure). After the heating ended, the pressure was released, and the molded article was cooled with water until the surface pressure due to the expanding force of the molded article decreased to 0.02 MPa (gauge pressure). The mold was then opened and the molded article was removed from the mold. The obtained molded article was cured in an oven at 80°C for 12 hours and then gradually cooled to room temperature. Thus, the polyamide-based resin expanded bead molded article was obtained. The above evaluation was performed on the obtained polyamide-based resin expanded bead molded article. The results are shown in Table 3.

Table 3

| | | Comparative Example 1 | Comparative Example 2 | Comparative Example 3 | Comparative Example 4 | Comparative Example 5 |
|---|---|---|---|---|---|---|
| Resin bead | Polyamide resin | 5033B | 5033B | 5033B | 5033B | 5033B |
| | Coloring pigment | Carbon black | Carbon black | Carbon black | Carbon black | Carbon black |
| | Amount of coloring pigment*) (% by mass) | 2.5 | 2.5 | 2.5 | 2.5 | 2.5 |
| | Higher fatty acid metal salt | Calcium stearate | Magnesium stearate | Talc | Zinc borate | PTFE |
| | Amount of higher fatty acid metal salt or other foam cell nucleating agents*) (mass ppm) | 1000 | 8000 | 1000 | 1000 | 1000 |
| Expanded bead | Apparent density (kg/m³) | 228 | 156 | 172 | 196 | 118 |
| | Average cell diameter (μm) | 134 | 134 | 125 | 142 | 122 |
| | Color unevenness | C | C | C | C | D |
| | Closed cell ratio (%) | 92 | 93 | 95 | 92 | 93 |
| Molded article | Color unevenness | C | C | C | C | D |

*) Amount of coloring pigment and amount of higher fatty acid metal salt or other foam cell nucleating agents are amounts in polyamide-based resin bead (% by mass or mass ppm)

From the results shown in Table 2, it can be seen that the polyamide-based resin expanded beads and the expanded bead molded articles obtained in the Examples had no visible color unevenness such as white streaks and had an excellent appearance. In particular, when compared with the Comparative Examples shown in Table 3, it is clear that the polyamide-based resin expanded beads and the expanded bead molded articles obtained in the Examples had no visible color unevenness such as white streaks and had an excellent appearance. Accordingly, it can be seen that the production method of the present invention provides a polyamide-based resin expanded bead, the color unevenness of which is suppressed.

**Claims**

1. A method for producing a polyamide-based resin expanded bead, the method comprising expanding a polyamide-based resin bead using a physical blowing agent, wherein

the polyamide-based resin bead comprises a coloring pigment and a higher fatty acid metal salt having 12 to 24 carbon atoms;
a metal in the higher fatty acid metal salt is one or more metals selected from the group consisting of magnesium, aluminum, and zinc; and
a content of the higher fatty acid metal salt in the polyamide-based resin bead is 500 to 5000 mass ppm.

2. The method for producing a polyamide-based resin expanded bead according to claim 1, wherein a content of the coloring pigment in the polyamide-based resin bead is 0.5 to 10% by mass.

3. The method for producing a polyamide-based resin expanded bead according to claim 1 or 2, wherein the coloring pigment is carbon black.

4. The method for producing a polyamide-based resin expanded bead according to claim 3, wherein a ratio of a content (mass ppm) of the higher fatty acid metal salt to a content (% by mass) of the carbon black [higher fatty acid metal salt/carbon black (mass ppm/% by mass)] is 50 to 3000.

5. The method for producing a polyamide-based resin expanded bead according to any one of claims 1 to 4, wherein the polyamide-based resin expanded bead has an apparent density of 10 kg/m$^3$ or more and 300 kg/m$^3$ or less.

6. The method for producing a polyamide-based resin expanded bead according to any one of claims 1 to 5, wherein the polyamide-based resin constituting the expanded bead has a melting point of 185°C or higher and 250°C or lower.

7. The method for producing a polyamide-based resin expanded bead according to any one of claims 1 to 6, wherein the polyamide-based resin expanded bead has an average cell diameter of 150 $\mu$m or more and 500 $\mu$m or less.

8. A polyamide-based resin expanded bead comprising a coloring pigment and a higher fatty acid metal salt having 12 to 24 carbon atoms, wherein

a metal in the higher fatty acid metal salt is one or more metals selected from the group consisting of magnesium, aluminum, and zinc; and
the polyamide-based resin expanded bead has an average cell diameter of 150 to 500 $\mu\eta\iota$.

## INTERNATIONAL SEARCH REPORT

International application No.

**PCT/JP2022/008476**

**A.　CLASSIFICATION OF SUBJECT MATTER**

***C08J 9/16***(2006.01)i
FI:　C08J9/16 CFG

According to International Patent Classification (IPC) or to both national classification and IPC

**B.　FIELDS SEARCHED**

Minimum documentation searched (classification system followed by classification symbols)

C08J9/00-9/42; B29C44/00-44/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.　DOCUMENTS CONSIDERED TO BE RELEVANT**

| Category* | Citation of document, with indication, where appropriate, of the relevant passages | Relevant to claim No. |
|---|---|---|
| A | WO 2019/050032 A1 (SEKISUI PLASTICS CO., LTD.) 14 March 2019 (2019-03-14) entire text | 1-8 |
| A | JP 2016-512850 A (NIKE INNOVATE C.V.) 09 May 2016 (2016-05-09) entire text | 1-8 |
| A | JP 2015-059201 A (UNITIKA LTD) 30 March 2015 (2015-03-30) entire text | 1-8 |
| A | WO 2014/185371 A1 (TOYOBO CO., LTD.) 20 November 2014 (2014-11-20) entire text | 1-8 |

☐ Further documents are listed in the continuation of Box C.　　☑ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| **25 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/008476**

| Patent document cited in search report | | | Publication date (day/month/year) | Patent family member(s) | | | Publication date (day/month/year) |
|---|---|---|---|---|---|---|---|
| WO | 2019/050032 | A1 | 14 March 2019 | US | 2020/0369862 | A1 | |
| | | | | EP | 3683262 | A1 | |
| | | | | CN | 111051415 | A | |
| JP | 2016-512850 | A | 09 May 2016 | US | 2014/0259329 | A1 | |
| | | | | WO | 2014/150122 | A2 | |
| | | | | EP | 2970619 | A1 | |
| | | | | KR | 10-2015-0097724 | A | |
| | | | | CN | 105121528 | A | |
| JP | 2015-059201 | A | 30 March 2015 | (Family: none) | | | |
| WO | 2014/185371 | A1 | 20 November 2014 | US | 2016/0032068 | A1 | |
| | | | | CN | 105283493 | A | |

Form PCT/ISA/210 (patent family annex) (January 2015)

## REFERENCES CITED IN THE DESCRIPTION

**Patent documents cited in the description**

- JP 2015059201 A
- WO 2014185371 A